# EUROPEAN PATENT SPECIFICATION

(11) **EP 4 339 046 B1**
(45) Date of publication and mention of the grant of the patent: **16.07.2025**
(21) Application number: 22195256.7
(22) Date of filing: 13.09.2022
(51) Int. Cl.: B60T 17/00, F15B 21/00

(54) **MODULAR LOW NOISE SILENCERS FOR COMMERCIAL VEHICLES**
GERÄUSCHARMER MODULARER SCHALLDÄMPFER FÜR NUTZFAHRZEUGE
SILENCIEUX MODULAIRE À FAIBLE BRUIT POUR VÉHICULES UTILITAIRES

(43) Date of publication of application: 20.03.2024
(73) Proprietor: KNORR-BREMSE Systeme für Nutzfahrzeuge GmbH, 80809 München (DE)
(72) Inventor: SOMODI, Richard, 6034 Helvécia (HU); COMPERA, Yves, 85748 Garching bei München (DE); TOTH, Tamas, 6000 Kecskemet (HU); LÖRINCZI, Ottó Botond, 1038 Budapest (HU)

(56) References cited:
- EP-A1- 3 505 801
- EP-B1- 2 082 138
- EP-B1- 3 540 207
- DE-A1- 102016 100 140

## Description

The present invention relates to a modular silencer, in particular for achieving a low noise of a compressed air system in a commercial vehicle.

Systems working with compressed gas, for example compressed air systems, can release large amounts of compressed gas to the environment within short time. This depressurization of the gas can result to remarkable noises. However, noise emissions have to be kept below an admissible level, and hence, silencers for systems of compressed gas are usually necessary.

In commercial electric vehicles, the largest part of the noise is generated by the mixing of a high velocity air flow with ambient air.

In prior art, document WO 2019/063350 A1 is known, disclosing a noise damper for compressed air systems with an inlet channel and a chamber for receiving sound-damping material. In this case, the inlet channel and the chamber are separated perpendicular to the compressed air flow by a separation plate, which in an outer peripheral region of the compressed air flow has a plurality of openings in order to introduce compressed air into the chamber. Such noise damper has a dampening function for noises created by a flow of compressed air, e.g. in a valve releasing compressed air.

EP 2 082 138 B1 discloses a silencer for compressed air systems according to the preamble of claim 1.

For electric commercial vehicles with a pneumatic brake system, a very low noise is of extreme importance. Presently, a valve assembly through which compressed air flows should fulfill the requirement of at most 72 dB(A) in 7 m distance, according to ISO R362 and EEC92/97 and ECE R51.

However, for an electric commercial vehicle with pneumatic brakes (for which the electric motor is very silent compared to other engines), the noise value of at most 72 dB(A) in 7 m distance is still too high.

Hence, there is a need for novel silencers, which are able to reduce a noise emission to below 68 dB(A), or more preferably below 60 dB(A) within 7 m distance from the vehicle.

Hence, the technical problem of the present application can be seen in providing an improved silencer, which is able to perform a noise dampening adapted to specific requirements (e.g. technical guidelines, standards), and hence to reach lower noise values compared to systems according to prior art.

In particular, externally generated noise, e.g. created by a valve which outlets compressed air to the atmosphere, should be dampened, as the most prominent part of the noise is generated by the mixing of the compressed air (flowing with a high velocity) with the ambient air.

The technical problem of the present application is solved by a silencer according to claim 1 and the use of a silencer according to claim 16. Further advantageous embodiments of the present application are subject-matters of the dependent claims.

A silencer according to the present invention comprises: an inlet opening for a compressed gas flow, a first sound-damping, being arranged downstream of the inlet opening, and a second sound-damping means, being arranged downstream of the first sound-damping means. A grid is arranged downstream of the second sound-damping means, which comprises at least two passages through which the compressed airflow is adapted to leave the silencer. Herein, the first sound-damping means has a smaller diameter compared to the second sound-damping means, and the second sound damping means has at least a portion with higher density compared to the first sound damping means.

That means that the second sound-damping means can have a portion with the same density as the first sound-damping means (e.g. downstream of the first sound-damping means), but also a portion with a higher density compared to the first sound damping means (e.g. upstream of the grid).

In particular the second sound-damping means increases the surface area of the outflow of the compressed gas, in particular compressed air, in order to reduce a turbulence intensity of the outflow.

The grid drives the flow to be as homogenous as possible, and further increases the surface area of the outflow in order to reduce the turbulence intensity of the outflow.

An effect is such configuration is that the flow velocity over the surface can be reduced. The whole surface of the sound-damping means is increased. Still, axial space can be saved, i.e. by the low diameter of the first sound-damping means.

By changing the diameter and the density of the first sound-damping means and the second sound-damping means, there is a change in the noise level. In general, there is a high velocity of the gas flow through the silencer. The energy of the created noise correlates with said velocity. By a silencer according to the present invention, the velocity of the flow can be reduced, as the surface of the silencer is increased, in particular by the second sound damping means.

The first sound-damping means has a lower diameter (compared to the second sound-damping means), which results in a lower cross-sectional area, being available for the flow of compressed air. Furthermore, the use of material with a lower density (compared to the second sound-damping means) results in the fact that there is less solid, but more voids, microchannels etc. available for flow. After the transition to the second sound-damping means, a higher density is present (i.e. material with more solid, but less voids, microchannels etc. available for flow) - at least in one portion- , however, this is compensated by the higher diameter (i.e. higher cross-sectional area). As a result, the flow velocity is reduced, and there is a smooth transition (with a low flor resistance) from the first sound-damping means to the second sound-damping means. The high density portion of the second sound-damping means improves the homogeneity of the flow as the higher density helps to improve distribution in the second mesh, which is of specific importance when the air leaves the silencer. By this arrangement, the flow resistance can be kept at the same level in the whole silencer.

Preferably, the first sound-damping means has an equal or smaller height compared to the second sound-damping means. As the second sound-damping means can have a higher height, a flow with reduced velocity through the height of the second sound-damping means can be ensured (with a longer residence time), hence the sound-damping properties being further improved.

Preferably, an intermediate element is arranged between the first sound-damping means and the second sound-damping means.

The intermediate element can serve for a proper distribution between the two sound-damping means by distributing the flow.

Hence, the flow from the first sound-damping means to the second sound-damping means can be distributed in a more homogeneous way. The distribution element can be pushed into the second mesh or included in the second mesh.

However, the intermediate element can also have the function to separate the first sound-damping means and the second sound-damping and hold them in their respective housings.

Preferably, the first sound-damping means and/or the second sound-damping means comprise a fibrous material, preferably a fiber mesh, even more preferably a fiber mesh comprising polyethylene.

Such materials serve for an effective damping of noise created by compressed gas, in particular compressed air.

Preferably, the cross-section of the at least two passages in the grid is polygonal, or preferably hexagonal, or alternatively round.

By a hexagonal arrangement, the space can be used in a most effective way. For such hexagonal shape of the passages, the effective flow surface is best, as the residual area by solid grid structure, where dead areas can form, is minimal. Hence, there is an increased ratio from passage area to area covered by solid (i.e. the grid). Hence, such structure allows the highest ratio of the effective flow area over the total grid area. Therefore, the best efflux area can be used for the flow of compressed air over the grid area.

Preferably, the height of the first sound-damping means is between 20 and 40 mm. Additionally or alternatively, the height of the second sound-damping means is between 20 and 40 mm. Experiments have shown that such heights are most effective for achieving noise levels of below 60 db(A).

Preferably, the diameter of the first sound-damping means is at most 65 mm, preferably at most 62 mm, and/or the diameter of the second sound-damping means is at least 80 mm, preferably at least 90 mm, more preferably at least 100 mm. It depends on the specific application. Such solution helps to achieve a most effective increase of the surface area of the outflow, hence most efficiently reduced in the turbulence and intensity of the outflow.

Preferably, the at least two passages of the grid have a length of at least 3 mm, preferably between 4 mm and 200 mm, more preferably at least 5 mm, even more preferably at least 7 mm, most preferably at least 10 mm.

The longer the passages are, the higher the effect of the flow homogenization is. In general, passages of at least 3 mm make the flow more homogenous, which can avoid the noise creation by a the flow itself. The passages with a length of at least 3 mm ensure a homogeneous flow of gas, and hence, the turbulence is reduced in the mixing region, where highly pressurized gas is mixed with ambient air.

Hence, passages of at least 3 mm can effectively reduce the noise generated by the mixing of air, which flows out of the chamber and the sound-damping means. Passages of at least 3 mm hence contribute to avoid the noise creation by turbulent flows.

Preferably, the cross-sectional area of the at least two passages decreases from the inlet of the passage until portion with lowest diameter, and increases from the portion with lowest diameter towards the outlet of the passage.

The specific shape of the passages mimics a nozzle, which usually has optimized flow characteristics. Such nozzle shape is able to decrease the velocity of the flow.

The specific structure of the cross-sectional area of the at least two passages, which is a streamlined shape, reduces the separation vortices and the drag vortices, which might form after the grid. Such streamlined passages reduce the drag caused by the grid, and also reduce the flow resistance which affects the operation speed of e.g. a pneumatic valve. Furthermore, such streamlined passages can reduce the size and the intensity of the vortices behind the grid (which form as compressed air is mixed with ambient air), and hence reduce the noise energy created by the turbulent flow.

Therefore, an effective reduction of turbulence wakes (vortexes) is possible, in particular by reducing the turbulence intensity in the grid, which is formed by wakes created by the air separation through the grid.

Preferably, the portion of the lowest diameter (for example approximately in the middle of the length of the passages) has a cross-sectional area which is between 80% and 95% of the cross-sectional area of the inlet of the passage and/or the outlet of the passage, preferably above 85%.

Such geometrical constraints mimic the shape of a nozzle. By such shape of the channels, there is a decrease of the velocity of the flow of compressed gas. Such geometrical constraints lead to a low drag at the inlet, and a low wake at the outlet. Furthermore, due to the nozzle shape, the mixing point / region (of pressurized and ambient gas) is moved towards the grid, and the separation wakes decrease regarding their size. Further, the flow cores (velocity profile of flow leaving each channel of grid) get broader, leading to very homogenous flow with less turbulence, hence resulting in less noise.

Furthermore, due to the nozzle shape, the mixing point / region (of pressurized and ambient gas) is moved away from the grid, and the separation wakes decrease regarding their size. Further, the flow cores (velocity profile of flow leaving each channel of grid) get broader, leading to very homogenous flow with less turbulence, hence resulting in less noise.

In one embodiment, the inlet of the passage and the outlet of the passage have the same cross-sectional area, which leads to a homogenous flow. The cross-sectional area is the area through which the air flows in the inlet, the outlet or at a length between them.

Preferably, the cross-section area of the passage is larger at the inlet of the passage than at the portion with the lowest diameter and the outside of the passage, the cross-sectional area of the passage is larger at the outlet of the passage than at the portion with the lowest diameter. By such nozzle design, a very homogenous flow can be guaranteed.

In this case, the passages act as a confusor, focusing the flow at the outlet of the passage.

Alternatively, the cross-sectional area of the passage is larger at the outlet of the passage than at the portion with the lowest diameter and at the inlet of the passage, wherein the cross-sectional area of the passages is larger at the inlet of the passage than at the portion with the lowest diameter

Such design of the nozzle is a diffusor, which also leads to a very rapid pressure reduction, however without generating noise, in particular by moving the mixing zone (of pressurized air and ambient air) away from the grid.

Preferably, the first sound-damping means is provided in a first housing, and the second sound-damping means is provided in the second housing. More preferably, the first housing and the second housing are connectable via a snap-fit connection. Also a bayonet connection or ultrasonic welding is possible.

Such design with different housings allows a modular design of the silencer, wherein a silencer can be custom-built according to specific sound-damping requirements.

The snap-fit connection allows for low installation efforts and an easy maintenance.

Preferably, a sealing is provided in the first housing and the sealing is adapted to seal a connection of the first housing to a housing of a valve. Such configuration helps to avoid the uncontrolled leakage between the silencer and the valve interface.

A preferable use of a silencer according to the present application is the use for a braking system, in particular a braking system of a commercial vehicle.

In the following, preferable embodiments of the present invention are described by the appended figures.

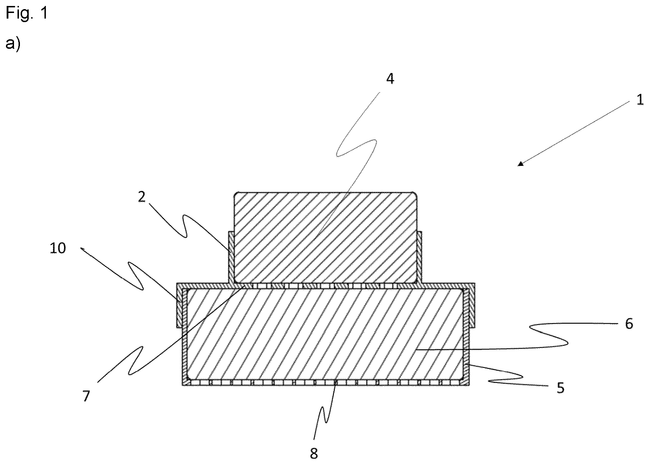

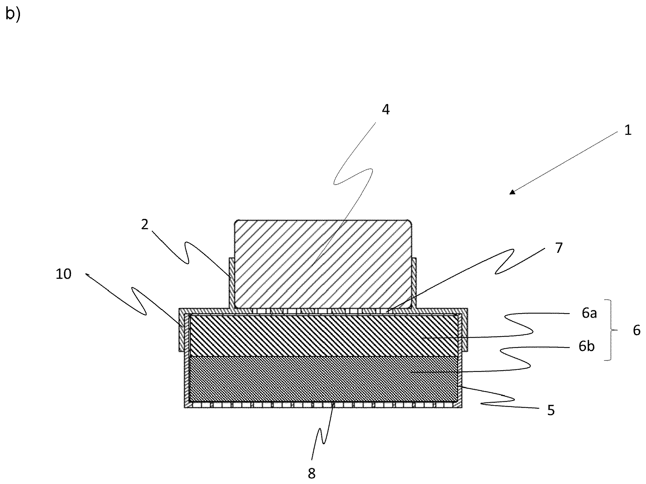

- Fig. 1 a): shows a modular design of a silencer, wherein two different sound-damping means are shown.
- Fig. 1 b): shows a similar design compared to Fig. 1 a) - however, the second sound-damping means is divided into two portions of different density.
- Fig. 2 a): shows a schematic arrangement of a silencer according to the present application below a valve. Herein, a cross-sectional presentation is shown. Fig. 4 b) show the air flow in such silencer.
- Fig. 3: shows a similar embodiment compared to Fig. 2.
- Fig. 4 a): shows a similar embodiment compared to Fig. Fig. 4 b) shows the air flow in such silencer.
- Fig. 5 a): shows another embodiment of a silencer according to the present application, wherein the thickness of an intermediate element is higher compared to Fig. 1 to 4. Fig. 5 b) show the air flow in such silencer
- Fig. 6: shows a detailed view on a grid.

In Fig. 1 a), a silencer 1 according to the present application is shown. Herein, there is a first housing 2 and a second housing 5. In the first housing 2, the first sound-damping means 4 is provided, and in the second housing 5, the second sound-damping means 6 is provided. Between the first sound-damping means 4 and the second sound-damping means 6, an intermediate element 7 is provided, being a flat plate with several openings. Below the second sound-damping means, a grid 8 with several passages 9 is used. There is a snap-fit connection 10 between the first housing 2 and the second housing 5. It can be seen that the diameter of the first sound-damping means 4 is lower compared to the second sound-damping means 6. Also, the density of at least a portion of the secod sound dampening means 6 is higher compared to the first sound-damping means 4.

Fig. 1 b) shows a similar design compared to Fig. 1 a) - however, the second sound-damping means 6 is divided into two portions of different density, an upper portion 6a and a lower portion 6b. The upper portion 6a has a density similar or equal compared to the first sound-damping means 4. The lower portion 6b has a higher density compared to the upper portion 6a and the first sound-damping means 4.

The lower portion 6b improves the homogeneity of the flow as the higher density helps to improve the flow distribution, which is of specific importance when the air leaves the silencer 1 through the grid 8..

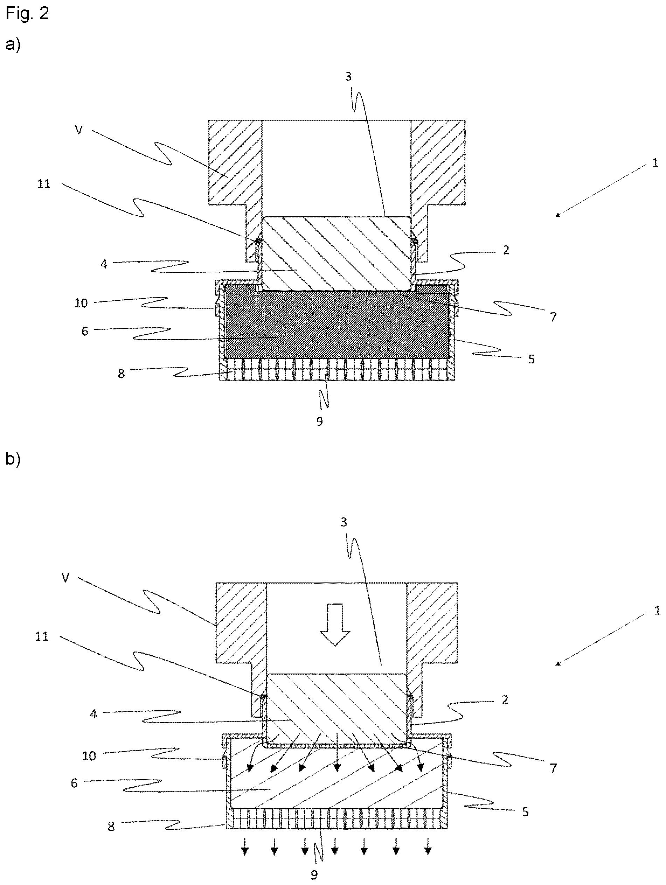

In Fig. 2 a), an arrangement of the silencer 1 according to the present application the valve V is shown. At the outlet of the valve V, the inlet opening 3 of the silencer 1 is arranged, and directly downstream of the inlet opening 3, the first sound-damping means 4 is provided. Below the first sound-damping means 4, an intermediate element 7 is provided, similarly to Fig. 1. Below the intermediate element 7, the second sound-damping means is provided, and below the second sound-damping means 8, a grid 8 with several passages 9 is provided. There is a snap-fit connection 10 between the first housing 2 and the second housing 5, and on the first housing 2, there is a sealing 11 in order to connect to the valve housing V. The first sound-damping means 4 protrudes into the second sound-damping means 6 to some extent. Fig. 2 b) shows the flow within such silencer 1. The different densities of the first sound-damping means 4 and the second sound-damping means 6 are not presented in Fig. 2 b). It can be seen that the compressed air flows in an downward-radial direction after the intermediate element 7, however a bit curved in the outer radial portion of the first sound-damping means 4, protruding into the second sound-damping means 6.

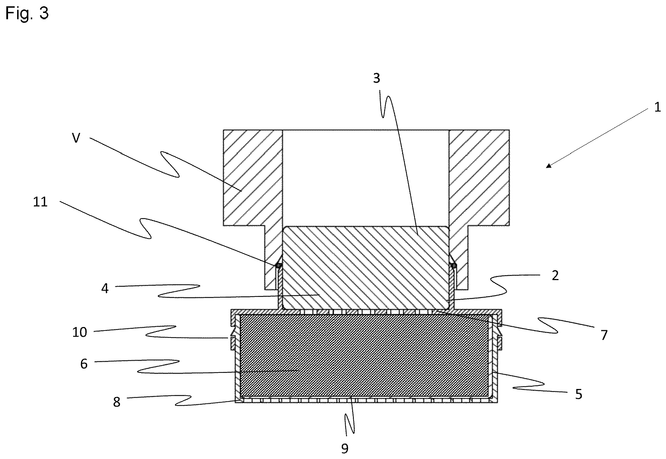

In the embodiment of Fig. 3, the grid 8 with the passages 9 is thinner compared to Fig. 2. The first sound-damping means 4 does not protrude into the second sound-damping means 6 to some in this embodiment.

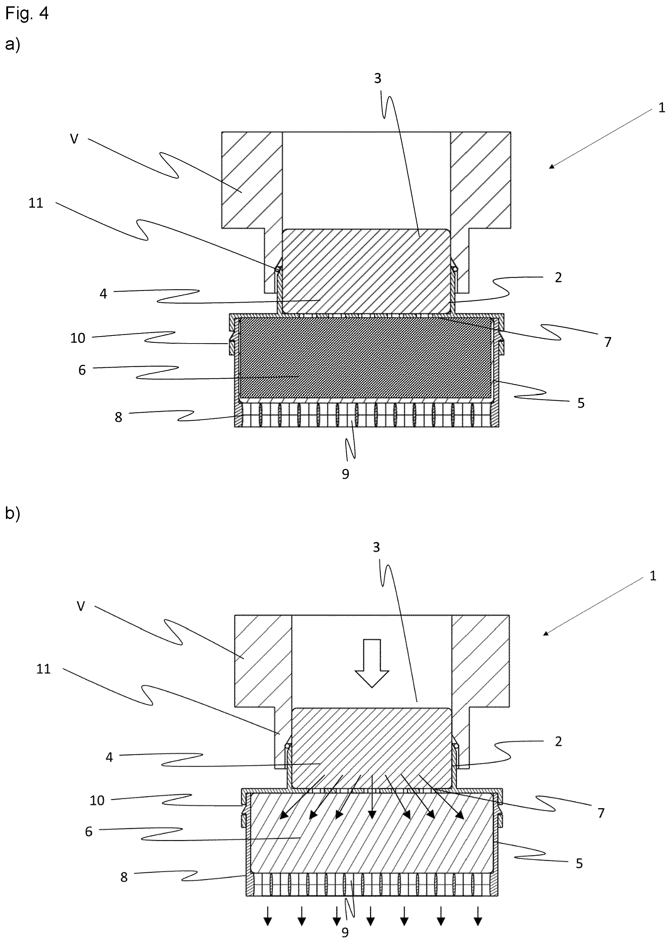

In the embodiment of Fig. 4 a), the grid 8 with the passages 9 is thicker compared to Fig. 3. The first sound-damping means 4 does not protrude into the second sound-damping means 6 to some in this embodiment. Fig. 4 b) shows the flow within such silencer 1. The different densities of the first sound-damping means 4 and the second sound-damping means 6 are not presented in Fig. 4 b). It can be seen that the compressed air flows in a downward-radial direction after the intermediate element 7.

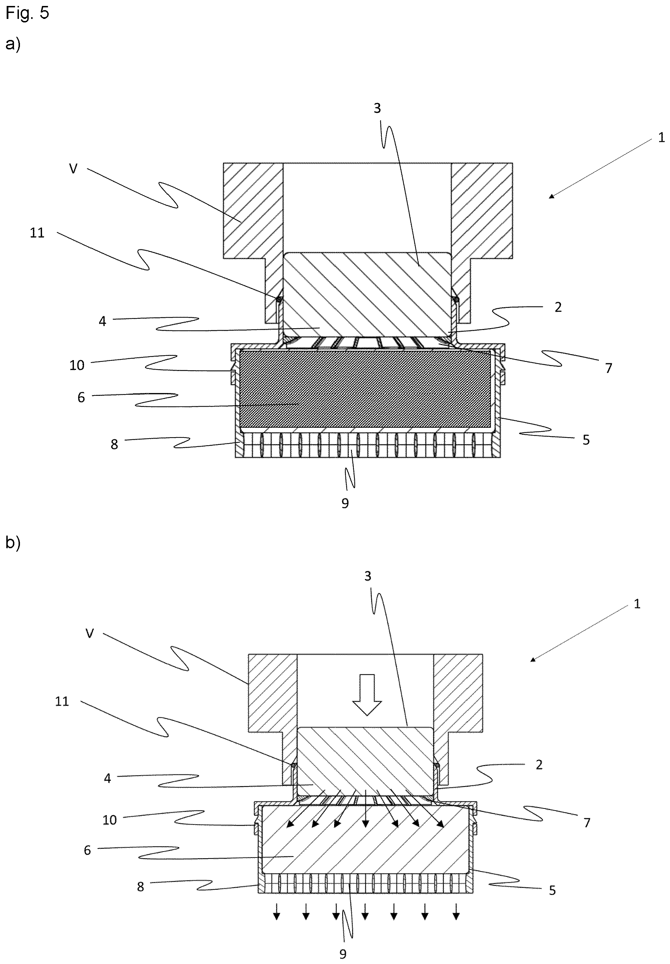

In the embodiment of Fig. 5 a), the intermediate element 7 has a specific shape, being thicker and having tapered passages. The first sound-damping means 4 does not protrude into the second sound-damping means 6 to some in this embodiment. Fig. 5 b) shows the flow within such silencer 1. The different densities of the first sound-damping means 4 and the second sound-damping means 6 are not presented in Fig. 5 b). It can be seen that the compressed air flows in a downward-radial direction after the intermediate element 7. The tapered openings of the intermediate element 7 scatters the air flow within the second sound-damping means 6.

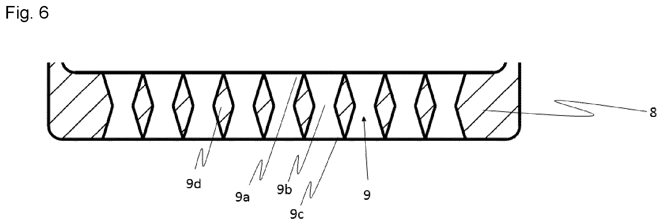

Fig. 6 shows a detailed view of one example of a grid 8. Each passage 8 has an inlet 9a, a portion with the lowest diameter 9b, and an outlet 9c - hence, the cross-sectional area decreases from the inlet 9a until the portion with the lowest diameter 9b, and then increases again until the outlet 9c. The passages 9 have a polygonal cross-sectional area (and shape). The cross-section of walls 9d between the passages 9 has a rhomboid shape.

However, also round or oval cross-sectional areas of the passages 9 are possible.

The first sound damping means 4 and the second sound damping means 6 can for example be connected by gluing or welding (e.g. to the intermediate element 7).

The first sound damping means 4 and the second sound damping means 6 can be fabricated by rolling a mesh. The upper and lower part of the mesh can for example be knitted in one step (with a variation of the density), and the diameter of the rolled mesh increases while rolling. In this case, no intermediate element 7 would be needed.

### LIST OF REFERENCE SIGNS

- 1: Silencer
- 2: First housing
- 3: Inlet opening
- 4: First sound damping means / mesh
- 5: Second housing
- 6: Second sound damping means / mesh
- 6a: upper portion
- 6b: lower portion
- 7: Intermediate element
- 8: Grid
- 9: Passage
- 10: Snap-fit connection
- 11: Sealing

- V: Valve housing

## Claims

1. Silencer (1) for compressed air systems, comprising:
an inlet opening (3) for a compressed gas flow,
a first sound damping means (4) being arranged downstream of the inlet opening (3);
a second sound damping means (6) being arranged downstream of the first sound damping means (4);
the silencer (1) being **characterized by** a grid (8) being arranged downstream of the second sound damping means (6), comprising at least two passages (9) through which the compressed air flow is adapted to leave the silencer (1),
wherein the first sound damping means (4) has a smaller diameter compared to the second sound damping means (6),
and wherein the second sound damping means (6) has at least a portion with higher density compared to the first sound damping means (4).

2. Silencer according to claim 1, wherein the first sound damping means (4) has an equal or smaller height compared to the second sound damping means (6).

3. Silencer (1) according to one of the previous claims, wherein an intermediate element (7) is arranged between the first sound damping means (4) and the second sound damping means (6).

4. Silencer (1) according to one of the previous claims, wherein the first sound damping means (4) and/or the second sound damping means (6) comprises a fibrous material, preferably a fiber mesh, more preferably a fiber mesh comprising polyethylene.

5. Silencer (1) according to one of the previous claims, wherein the cross-section of the at least two passages (9) of the grid (8) is polygonal, preferably hexagonal, or round.

6. Silencer (1) according to one of the previous claims, wherein the height of the first sound damping means (4) is between 20 mm and 40 mm, and/or the height of the second sound damping means (6) is between 20 mm and 40 mm.

7. Silencer (1) according to one of the previous claims, wherein the diameter of the first sound damping means (4) is at most 65 mm, preferably at most 62 mm, and/or the diameter of the second sound damping means (4) is at least 80 mm, preferably at least 90 mm, more preferably at least 100 mm.

8. Silencer (1) according to one of the previous claims, wherein the at least two passages (9) have a length of at least 3 mm, preferably between 4 mm and 200 mm, more preferably at least 5 mm, even more preferably at least 7 mm, most preferably at least 10 mm.

9. Silencer (1) according to one of the previous claims, wherein the cross-sectional area of the at least two passages (9) respectively decreases from the inlet (9a) of the passage until a portion with lowest diameter (9b), and increases from the portion with lowest diameter (9b) towards the outlet (9c) of the passage.

10. Silencer (1) according to claim 9, wherein the portion with lowest diameter (9b) of the at least two passages (9) has a cross-sectional area between 80% and 95% of the cross-sectional area of the inlet (9a) of the at least two passages and/or the outlet (9c) the at least two passages, preferably above 85%.

11. Silencer (1) according to one of the previous claims 9 or 10, wherein the inlet (9a) of the at least one passage (9) and the outlet (9c) of the at least one passage (9) have the same cross-sectional area.

12. Silencer (1) according to one of claims 9 to 10, wherein the cross-sectional area of the at least one passage (9) is larger at the inlet (9a) of the at least one passage than at the portion with lowest diameter (9b) and the outlet (9c) of the at least one passage, and wherein the cross-sectional area of the at least one passage (9) is larger at the outlet (9c) of the at least one passage than at the portion with lowest diameter (9b).

13. Silencer (1) according to one of claims 9 to 10, wherein the cross-sectional area of the at least one passage (9) is larger at the outlet (9c) of the at least one passage than at the portion with lowest diameter (9b) and the inlet (9a) of the at least one passage, and wherein the cross-sectional area of the at least one passage (9) is larger at the inlet (9a) of the at least one passage than at the portion with lowest diameter (9b).

14. Silencer (1) according to one of the previous claims, wherein the first sound damping means (4) **is** provided in a first housing (2), and the second sound damping means (6) is provided in a second housing (5), and the first housing (2) and the second housing (5) are preferably connectable via a snap-fit connection (10).

15. Silencer (1) according to one of the previous claims, wherein a sealing (11) is provided at the first housing (2), wherein the sealing (11) is adapted to seal a connection of the first housing (2) to a housing of a valve (V).

16. Use of a silencer (1) according to one of claims 1 to 15 for a braking system, preferably a braking system (B) of a commercial vehicle.

## Patentansprüche

1. Schalldämpfer (1) für Druckluftsysteme, umfassend:
eine Einlassöffnung (3) für einen Druckgasstrom,
ein erstes Schalldämpfungsmittel (4), das stromabwärts der Einlassöffnung (3) angeordnet ist; ein zweites Schalldämpfungsmittel (6), das stromabwärts des ersten Schalldämpfungsmittels (4) angeordnet ist;
wobei der Schalldämpfer (1) **gekennzeichnet ist durch**
ein Gitter (8), das stromabwärts des zweiten Schalldämpfungsmittels (6) angeordnet ist und mindestens zwei Durchgänge (9) umfasst, durch die der Druckluftstrom so angepasst wird, dass er den Schalldämpfer (1) verlassen kann,
wobei das erste Schalldämpfungsmittel (4) im Vergleich zum zweiten Schalldämpfungsmittel (6) einen kleineren Durchmesser aufweist,
und wobei das zweite Schalldämpfungsmittel (6) mindestens einen Abschnitt mit höherer Dichte im Vergleich zum ersten Schalldämpfungsmittel (4) aufweist.

2. Schalldämpfer nach Anspruch 1, wobei das erste Schalldämpfungsmittel (4) im Vergleich zum zweiten Schalldämpfungsmittel (6) eine gleiche oder kleinere Höhe aufweist.

3. Schalldämpfer (1) nach einem der vorstehenden Ansprüche, wobei zwischen dem ersten Schalldämpfungsmittel (4) und dem zweiten Schalldämpfungsmittel (6) ein Zwischenelement (7) angeordnet ist.

4. Schalldämpfer (1) nach einem der vorstehenden Ansprüche, wobei das erste Schalldämpfungsmittel (4) und/oder das zweite Schalldämpfungsmittel (6) ein Fasermaterial umfasst, bevorzugt ein Fasergeflecht, bevorzugter ein Fasergeflecht, das Polyethylen umfasst.

5. Schalldämpfer (1) nach einem der vorstehenden Ansprüche, wobei der Querschnitt der mindestens zwei Durchgänge (9) des Gitters (8) polygonal, bevorzugt hexagonal, oder rund ist.

6. Schalldämpfer (1) nach einem der vorstehenden Ansprüche, wobei die Höhe des ersten Schalldämpfungsmittels (4) zwischen 20 mm und 40 mm beträgt und/oder die Höhe des zweiten Schalldämpfungsmittels (6) zwischen 20 mm und 40 mm beträgt.

7. Schalldämpfer (1) nach einem der vorstehenden Ansprüche, wobei der Durchmesser des ersten Schalldämpfungsmittels (4) höchstens 65 mm, bevorzugt höchstens 62 mm beträgt und/oder der Durchmesser des zweiten Schalldämpfungsmittels (4) mindestens 80 mm, bevorzugt mindestens 90 mm, bevorzugter mindestens 100 mm beträgt.

8. Schalldämpfer (1) nach einem der vorstehenden Ansprüche, wobei die mindestens zwei Durchgänge (9) eine Länge von mindestens 3 mm, bevorzugt zwischen 4 mm und 200 mm, bevorzugter mindestens 5 mm, noch bevorzugter mindestens 7 mm, besonders bevorzugt mindestens 10 mm aufweisen.

9. Schalldämpfer (1) nach einem der vorstehenden Ansprüche, wobei die Querschnittsfläche der mindestens zwei Durchgänge (9) jeweils vom Einlass (9a) des Durchgangs bis zu einem Abschnitt mit geringstem Durchmesser (9b) abnimmt und vom Abschnitt mit geringstem Durchmesser (9b) in Richtung des Auslasses (9c) des Durchgangs zunimmt.

10. Schalldämpfer (1) nach Anspruch 9, wobei der Abschnitt mit dem geringsten Durchmesser (9b) der mindestens zwei Durchgänge (9) eine Querschnittsfläche zwischen 80 % und 95 % der Querschnittsfläche des Einlasses (9a) der mindestens zwei Durchgänge und/oder des Auslasses (9c) der mindestens zwei Durchgänge aufweist, bevorzugt über 85%.

11. Schalldämpfer (1) nach einem der vorstehenden Ansprüche 9 oder 10, wobei der Einlass (9a) des mindestens einen Durchgangs (9) und der Auslass (9c) des mindestens einen Durchgangs (9) die gleiche Querschnittsfläche aufweisen.

12. Schalldämpfer (1) nach einem der Ansprüche 9 bis 10, wobei die Querschnittsfläche des mindestens einen Durchgangs (9) am Einlass (9a) des mindestens einen Durchgangs größer ist als am Abschnitt mit dem geringsten Durchmesser (9b) und am Auslass (9c) des mindestens einen Durchgangs, und
wobei die Querschnittsfläche des mindestens einen Durchgangs (9) am Auslass (9c) des mindestens einen Durchgangs größer ist als am Abschnitt mit dem geringsten Durchmesser (9b).

13. Schalldämpfer (1) nach einem der Ansprüche 9 bis 10, wobei die Querschnittsfläche des mindestens einen Durchgangs (9) am Auslass (9c) des mindestens einen Durchgangs größer ist als am Abschnitt mit dem geringsten Durchmesser (9b) und am Einlass (9a) des mindestens einen Durchgangs, und wobei die Querschnittsfläche des mindestens einen Durchgangs (9) am Einlass (9a) des mindestens einen Durchgangs größer ist als am Abschnitt mit dem geringsten Durchmesser (9b).

14. Schalldämpfer (1) nach einem der vorstehenden Ansprüche, wobei das erste Schalldämpfungsmittel (4) in einem ersten Gehäuse (2) und das zweite Schalldämpfungsmittel (6) in einem zweiten Gehäuse (5) bereitgestellt ist und das erste Gehäuse (2) und das zweite Gehäuse (5) bevorzugt über eine Schnappverbindung (10) verbindbar sind.

15. Schalldämpfer (1) nach einem der vorstehenden Ansprüche, wobei an dem ersten Gehäuse (2) eine Dichtung (11) bereitgestellt ist, wobei die Dichtung (11) dazu angepasst ist, eine Verbindung des ersten Gehäuses (2) mit einem Gehäuse eines Ventils (V) abzudichten.

16. Verwendung eines Schalldämpfers (1) nach einem der Ansprüche 1 bis 15 für ein Bremssystem, bevorzugt ein Bremssystem (B) eines Nutzfahrzeugs.

## Revendications

1. Silencieux (1) pour systèmes à air comprimé, comprenant :
une ouverture d'entrée (3) pour un flux de gaz comprimé,
un premier moyen atténuateur de bruit (4) étant agencé en aval de l'ouverture d'entrée (3) ; un second moyen atténuateur de bruit (6) étant agencé en aval du premier moyen atténuateur de bruit (4) ;
le silencieux (1) étant **caractérisé par**
une grille (8) étant agencée en aval du second moyen atténuateur de bruit (6) comprenant au moins deux passages (9) à travers lesquels le flux d'air comprimé est apte à sortir du silencieux (1),
dans lequel le premier moyen atténuateur de bruit (4) présente un diamètre plus petit que celui du second moyen atténuateur de bruit (6),
et dans lequel le second moyen atténuateur de bruit (6) présente au moins une partie d'une densité plus élevée par rapport à celle du premier moyen atténuateur de bruit (4).

2. Silencieux selon la revendication 1, dans lequel le premier moyen atténuateur de bruit (4) présente une hauteur égale ou inférieure par rapport à celle du second moyen atténuateur de bruit (6).

3. Silencieux (1) selon l'une des revendications précédentes, dans lequel un élément intermédiaire (7) est agencé entre le premier moyen atténuateur de bruit (4) et le second moyen atténuateur de bruit (6).

4. Silencieux (1) selon l'une des revendications précédentes, dans lequel le premier moyen atténuateur de bruit (4) et/ou le second moyen atténuateur de bruit (6) comprend un matériau fibreux, de préférence un treillis de fibres, plus préférentiellement un treillis de fibres comprenant du polyéthylène.

5. Silencieux (1) selon l'une des revendications précédentes, dans lequel la section transversale des au moins deux passages (9) de la grille (8) est polygonale, de préférence hexagonale, ou ronde.

6. Silencieux (1) selon l'une des revendications précédentes, dans lequel la hauteur du premier moyen atténuateur de bruit (4) est comprise entre 20 mm et 40 mm, et/ou la hauteur du second moyen atténuateur de bruit (6) est comprise entre 20 mm et 40 mm.

7. Silencieux (1) selon l'une des revendications précédentes, dans lequel le diamètre du premier moyen atténuateur de bruit (4) est d'au plus 65 mm, de préférence d'au plus 62 mm, et/ou le diamètre du second moyen atténuateur de bruit (4) est d'au moins 80 mm, de préférence d'au moins 90 mm, plus préférentiellement d'au moins 100 mm.

8. Silencieux (1) selon l'une des revendications précédentes, dans lequel les au moins deux passages (9) présentent une longueur d'au moins 3 mm, de préférence comprise entre 4 mm et 200 mm, plus préférentiellement d'au moins 5 mm, encore plus préférentiellement d'au moins 7 mm, le plus préférentiellement d'au moins 10 mm.

9. Silencieux (1) selon l'une des revendications précédentes, dans lequel la section transversale des au moins deux passages (9) diminue respectivement depuis l'entrée (9a) du passage jusqu'à une partie de diamètre le plus faible (9b), et augmente de la partie de diamètre le plus faible (9b) vers la sortie (9c) du passage.

10. Silencieux (1) selon la revendication 9, dans lequel la partie de diamètre le plus faible (9b) des au moins deux passages (9) présente une section transversale comprise entre 80 % et 95 % de la section transversale de l'entrée (9a) des au moins deux passages et/ou de la sortie (9c) des au moins deux passages, de préférence au-dessus de 85 %.

11. Silencieux (1) selon l'une des revendications 9 ou 10 précédentes, dans lequel l'entrée (9a) du au moins un passage (9) et la sortie (9c) du au moins un passage (9) présentent la même section transversale.

12. Silencieux (1) selon l'une des revendications 9 à 10, dans lequel la section transversale du au moins un passage (9) est plus grande à l'entrée (9a) du au moins un passage qu'au niveau de la partie de diamètre le plus faible (9b) et qu'à la sortie (9c) du au moins un passage, et
dans lequel la section transversale du au moins un passage (9) est plus grande à la sortie (9c) du au moins un passage qu'au niveau de la partie de diamètre le plus faible (9b).

13. Silencieux (1) selon l'une des revendications 9 à 10, dans lequel la section transversale du au moins un passage (9) est plus grande à la sortie (9c) du au moins un passage qu'au niveau de la partie de diamètre le plus faible (9b) et qu'à l'entrée (9a) du au moins un passage, et dans lequel la section transversale du au moins un passage (9) est plus grande à l'entrée (9a) du au moins un passage qu'au niveau de la partie de diamètre le plus faible (9b).

14. Silencieux (1) selon l'une des revendications précédentes, dans lequel le premier moyen atténuateur de bruit (4) est disposé dans un premier boîtier (2), et le second moyen atténuateur de bruit (6) est disposé dans un second boîtier (5), et le premier boîtier (2) et le second boîtier (5) peuvent de préférence être reliés par l'intermédiaire d'une liaison par encliquetage (10).

15. Silencieux (1) selon l'une des revendications précédentes, dans lequel une garniture d'étanchéité (11) est disposée au niveau du premier boîtier (2), dans lequel la garniture d'étanchéité (11) est conçue pour assurer l'étanchéité d'une liaison du premier boîtier (2) à un logement d'une vanne (V).

16. Utilisation d'un silencieux (1) selon l'une des revendications 1 à 15 pour un système de freinage, de préférence un système de freinage (B) d'un véhicule utilitaire.
